# EUROPÄISCHE PATENTSCHRIFT

(11) **EP 1 787 368 B1**
(45) Veröffentlichungstag und Bekanntmachung des Hinweises auf die Patenterteilung: **27.02.2008**
(21) Anmeldenummer: 05786863.0
(22) Anmeldetag: 06.09.2005
(51) Int. Cl.: H02B 1/056

(54) **HALTERUNGSEINRICHTUNG MIT EINEM DARAUF BEFESTIGTEN SCHALTGERÄT**
MOUNTING DEVICE WITH A SWITCHGEAR MOUNTED THEREON
DISPOSITIF DE MAINTIEN AUQUEL EST FIXE UN APPAREIL DE COMMUTATION

(30) Priorität: 08.09.2004 DE 102004043469
(43) Veröffentlichungstag der Anmeldung: 23.05.2007
(73) Patentinhaber: SIEMENS AKTIENGESELLSCHAFT, 80333 München (DE)
(72) Erfinder: ADUNKA, Robert, 92237 Sulzbach-Rosenberg (DE); HELDMANN, Berthold, 92272 Freudenberg (DE)
(86) Internationale Anmeldenummer: PCT/EP2005/054385
(87) Internationale Veröffentlichungsnummer: WO 2006/027355

(56) Entgegenhaltungen:
- ES-A2- 2 076 075
- FR-A- 2 503 450
- US-A- 3 093 773
- US-A- 4 694 379

## Beschreibung

Die Erfindung betrifft eine Halterungseinrichtung mit einem darauf befestigten elektrischen Schaltgerät.

Die EP 1 029 390 offenbart einen auf einem Zwischenträger montierten, aus einem Schütz und einem Leistungsschalter zusammengesetzten Verbraucherabzweig. Der Zwischenträger ist mit einem Kanal versehen, in dem Steckkontakte liegen, die über elektrische Leitungen mit der Abzweig-Baugruppe zur Zuführung des Stromes verbunden sind. Die Steckkontakte werden durch Aufsetzen des Zwischenträgers mit dem Verbraucherabzweig auf einen Grundträger mit darin befindlichen Gegensteckkontakten kontaktiert. Mit der Halterung auf dem Grundträger wird zugleich die Kontaktierung durchgeführt.

Die FR 25 03 450 sowie die US 3,093,773 offenbaren eine Halterungseinrichtung mit einem darauf befestigten elektrischen Schaltgerät. Das Schaltgerät weist Steckkontakte zur Steckkontaktierung mit an der Halterungseinrichtung vorgesehenen Gegensteckkontakten zum Kontaktieren das Schaltgerät mit dem Speisestromkreis auf. Die Halterungseinrichtung und das Schaltgerät sind mit Halterungsmitteln versehen, die das Schaltgerät in einer definierten Parkposition halten, ohne dass die Steckkontakte die Gegensteckkontakte kontaktieren.

Der Erfindung liegt die Aufgabe zugrunde, eine Halterungseinrichtung der oben genannten Art zu schaffen, die im Hinblick auf Halterung und Kontaktierung des Schaltgeräts verbessert ist.

Die Aufgabe wird durch eine Halterungseinrichtung mit den Merkmalen nach Anspruch 1 gelöst.

Mit dieser Vorverrastung des Schaltgeräts in der Parkposition wird ein sicherer Zustand erreicht, in dem an das Schaltgerät angeschlossene Verbraucher stromlos sind und an diesen Verbrauchern daher ohne Gefährdung ein Eingriff oder z.B. ein Austausch der Verbraucher möglich ist.

Vorteilhafte Weiterbildungen der Erfindung sind den Unteransprüchen zu entnehmen.

Eine besonders vorteilhafte, d.h. einfache und kostengünstige Lösung besteht, wenn die ersten Halterungsmittel als erste Rastmittel zur gegenseitigen Verrastung zwischen dem Schaltgerät und der Halterungseinrichtung ausgebildete sind.

Die Halterung des Schaltgeräts lässt sich in einfacher Weise bewerkstelligen, wenn die Halterungseinrichtung Führungsmittel aufweist, die zur Führung des Schaltgeräts bei seiner Steckbewegung in die Parkposition dienen.

Die Ausführung gemäß dem Merkmal nach Anspruch 4 zeichnet sich dadurch aus, dass die Kontaktposition durch entsprechende Halterungsmittel als gesicherter Zustand eingenommen wird. Um diesen zu erreichen, muss erst die Parkposition durchfahren werden.

Besonders einfaches Kontaktieren ermöglicht die Weiterbildung der Erfindung gemäß Anspruch 11, bei der die Steckkontakte und die Gegensteckkontakte derart angeordnet und ausgerichtet sind, dass sie durch Steckbewegung im Wesentlichen senkrecht zur Rückwand des Schaltgeräts kontaktierbar ist.

Ausführungsbeispiele der Erfindung werden im Folgenden anhand einer Zeichnung näher erläutert. Es zeigen
- FIG 1: eine erste erfindungsgemäße Halterungseinrichtung mit darauf befestigtem, elektrischen Schaltgerät im nicht kontaktiertem Zustand,
- FIG 2: die erfindungsgemäße Halterungseinrichtung gemäß FIG 1 mit darauf befestigtem und kontaktiertem elektrischen Schaltgerät und
- FIG 3: eine zweite erfindungsgemäße Halterungseinrichtung und ein auf dieser befestigbares und steckkontaktierbares elektrische Schaltgerät.

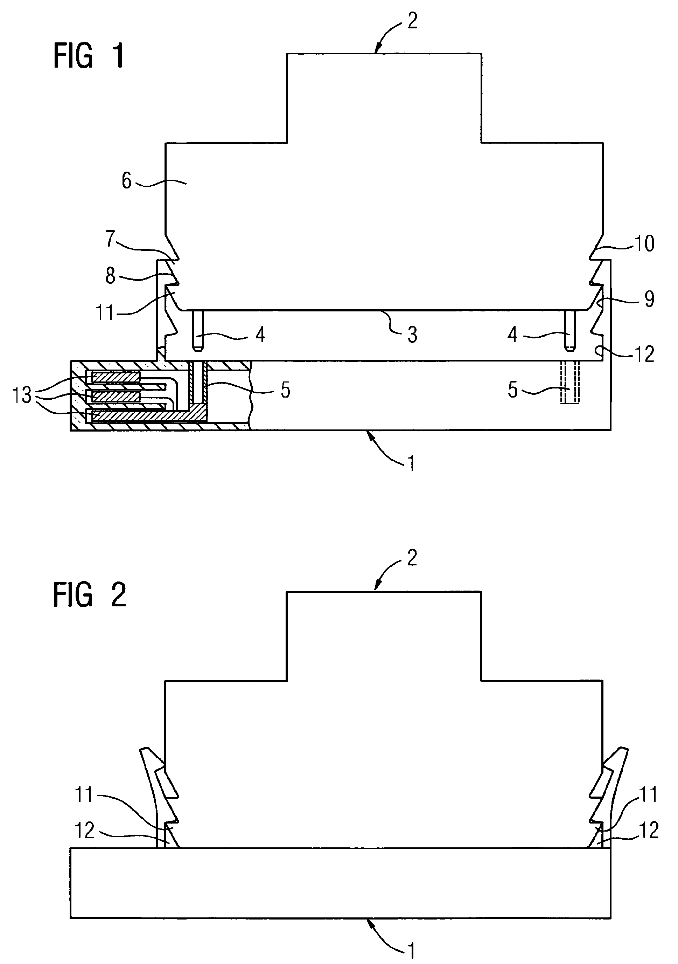

In FIG 1 ist eine Halterungseinrichtung 1 und ein auf dieser befestigtes elektrische Schaltgerät 2 dargestellt. Das Schaltgerät 2 weist Steckkontakte auf, die als aus der Rückwand 3 des Schaltgeräts 1 herausragende Kontaktstifte 4 ausgebildet sind und zur Steckkontaktierung mit Steckbuchsen als Gegensteckkontakte an der Halterungseinrichtung 1 dienen. Die Steckbuchsen 5 sind berührungssicher in der Halterungseinrichtung 1 integriert. Die Halterungseinrichtung 1 und das Schaltgerät 2, vorzugsweise sein Gehäuse 6, sind mit ersten Rastmitteln in Form von Rastnasen 7 und diesen angepassten Einschnitten 8 als ersten Halterungsmitteln versehen, die das Schaltgerät 2 in einer definierten Parkposition gemäß FIG 1 halten, ohne dass dabei die Steckkontakte 4 die Gegensteckkontakte 5 kontaktieren.

Zur Führung des Schaltgeräts 2 bei einer Steckbewegung in die Parkposition ist die Halterungseinrichtung 1 mit Führungsmitteln ausgestattet, die im vorliegenden Ausführungsbeispiel durch Innenwände 9 vorgegeben sind, an denen das Schaltgerät 2 mit seinen Seitenwänden 10 geführt entlang gleitet.

Weiterhin weisen die Halterungseinrichtung 1 und das Schaltgerät 2, vorzugsweise an seinem Gehäuse 6, zweite Halterungsmittel auf, die als zweite Rastmittel ausgebildet sind und Rastnasen 11 sowie angepasste Einschnitte 12 umfassen, die das Schaltgerät 2 in einer definierten Kontaktposition gemäß FIG 2 halten, in der die Steckkontakte 4 die Gegensteckkontakte 5 kontaktieren, wobei die Kontaktposition erst nach Durchfahren der Parkposition erreichbar ist.

Die Gegensteckkontakte 5 sind mit einem in der Halterungseinrichtung 1 integrierten Stromverteilungssystem mit den Stromschienen 13 elektrisch verbunden.

Die Steckkontakte 4 und die Gegensteckkontakte 5 sind derart angeordnet und ausgerichtet, dass sie durch eine Steckbewegung im Wesentlichen senkrecht zur Rückwand 3 des Schaltgeräts 2 kontaktierbar sind.

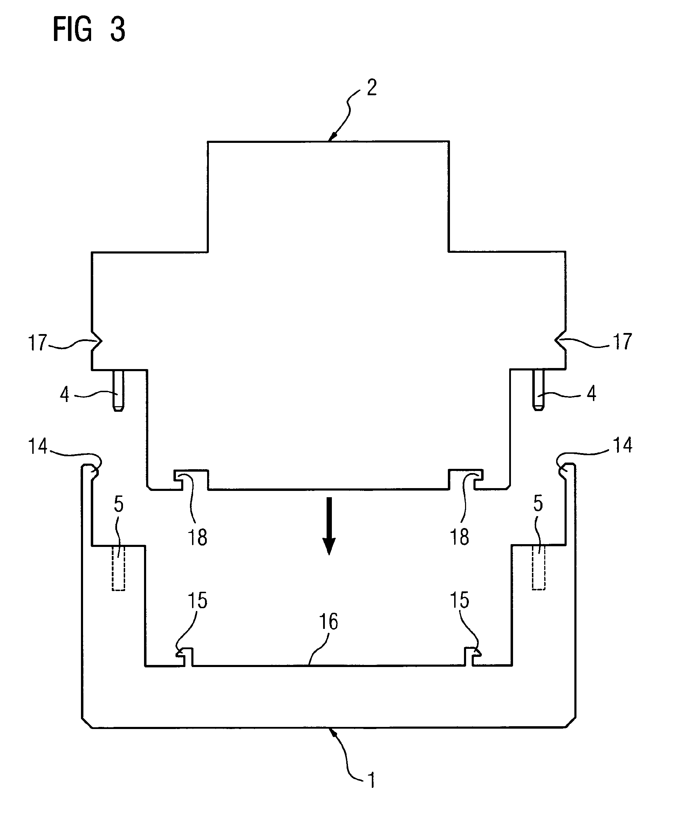

Im weiteren Ausführungsbeispiel gemäß FIG 3 ist die Halterungseinrichtung 1 mit Rasthaken 14 zur Vorverrastung des Schaltgeräts 2 in der Parkposition versehen, sowie mit weiteren Rasthaken 15 an der Innenwand 16 zur Verrastung des Schaltgeräts 2 im kontaktierten Zustand. Das Steckkontaktierbare Schaltgerät 2 weist an seinem Gehäuse 6 den Rasthaken 14, 15 angepasste Einschnitte 17, 18 auf. Die Steckkontakte 4 sind hier in einer gegenüber der Rückwand 3 des Schaltgeräts abgestuften Ebene angeordnet, was alternative Gestaltungsmöglichkeiten der Halterungseinrichtung 1, insbesondere für die Unterbringung des Stromverteilungssystems, schafft.

## Patentansprüche

1. Halterungseinrichtung (1) mit einem darauf befestigten elektrischen Schaltgerät (2), **gekennzeichnet durch** folgende Merkmale:
a) Das Schaltgerät (2) weist Steckkontakte (4) zur Steckkontaktierung mit an der Halterungseinrichtung (1) vorgesehenen Gegensteckkontakten (5) auf,
b) die Halterungseinrichtung (1) und das Schaltgerät (2) sind mit ersten Halterungsmitteln (7, 8) versehen, die das Schaltgerät (2) in einer definierten Parkposition halten, ohne dass die Steckkontakte (4) die Gegensteckkontakte (5) kontaktieren, sodass das Schaltgerät sowohl vom Versorgungskreis als auch von angeschlossenen Verbrauchern getrennt wird.

2. Halterungseinrichtung nach Anspruch 1,
**dadurch gekennzeichnet, dass** die ersten Halterungsmittel als erste Rastmittel (7, 8) zur gegenseitigen Verrastung zwischen dem Schaltgerät (2) und der Halterungseinrichtung (1) ausgebildet sind.

3. Halterungseinrichtung nach Anspruch 1 oder 2,
**dadurch gekennzeichnet, dass** die Halterungseinrichtung (1) Führungsmittel (9) aufweist, die zur Führung des Schaltgeräts (2) bei seiner Steckbewegung in die Parkposition dienen.

4. Halterungseinrichtung nach einem der vorangehenden Ansprüche,
**dadurch gekennzeichnet, dass** die Halterungseinrichtung (1) und das Schaltgerät (2) zweite Halterungsmittel (11, 12) aufweisen, die das Schaltgerät in einer definierten Kontaktposition halten, in der die Steckkontakte (4) die Gegensteckkontakte (5) kontaktieren, wobei die Kontaktposition erst nach Durchfahren der Parkposition erreichbar ist.

5. Halterungseinrichtung nach einem der vorangehenden Ansprüche,
**dadurch gekennzeichnet, dass** die zweiten Halterungsmittel als zweite Verrastmittel (11, 12) ausgeführt sind.

6. Halterungseinrichtung nach einem der vorangehenden Ansprüche,
**dadurch gekennzeichnet, dass** die Gegensteckkontakte (5) mit einem in die Halterungseinrichtung integrierten Stromverteilungssystem (13) verbunden sind.

7. Halterungseinrichtung nach einem der vorangehenden Ansprüche,
**gekennzeichnet durch** erste Halterungsmittel (11) am Gehäuse (6) des Schaltgeräts (2).

8. Halterungseinrichtung nach einem der vorangehenden Ansprüche,
**gekennzeichnet durch** zweite Halterungsmittel (11) am Gehäuse (6) des Schaltgeräts (2).

9. Halterungseinrichtung nach einem der vorangehenden Ansprüche,
**dadurch gekennzeichnet, dass** die Steckkontakte (4) aus dem Gehäuse (6) des Schaltgeräts (2) hervorragen.

10. Halterungseinrichtung nach einem der vorangehenden Ansprüche,
**dadurch gekennzeichnet, dass** die Gegensteckkontakte (5) berührungssicher in der Halterungseinrichtung (1) integriert sind.

11. Halterungseinrichtung nach einem der vorangehenden Ansprüche,
**dadurch gekennzeichnet, dass** die Steckkontakte (4) und die Gegensteckkontakte (5) derart angeordnet und ausgerichtet sind, dass sie durch Steckbewegung im Wesentlichen senkrecht zur Rückwand (3) des Schaltgeräts (2) kontaktierbar sind.

## Claims

1. Mounting device (1) having an electrical switchgear (2) mounted thereon, **characterized by** the following features:
a) the switchgear (2) comprises plug contacts (4) for making plug-in contact with mating plug contacts (5) provided on the mounting device (1),
b) the mounting device (1) and the switchgear (2) are provided with first locating means (7, 8), which hold the switchgear (2) in a defined parked position, without the plug contacts (4) making contact with the mating plug contacts (5), so that the switchgear is isolated both from the supply circuit and from connected loads.

2. Mounting device according to claim 1,
**characterized in that** the first locating means are designed as first latching means (7, 8) for mutual latching between the switchgear (2) and the mounting device (1).

3. Mounting device according to claim 1 or 2,
**characterized in that** the mounting device (1) has guidance means (9) that are used to guide the switchgear (2) into the parked position as it is being plugged in.

4. Mounting device according to any of the previous claims,
**characterized in that** the mounting device (1) and the switchgear (2) comprise second locating means (11, 12), which hold the switchgear in a defined contact position, in which the plug contacts (4) make contact with the mating plug contacts (5), where the contact position can only be reached after passing through the parked position.

5. Mounting device according to any of the previous claims,
**characterized in that** the second locating means are designed as second latching means (11, 12).

6. Mounting device according to any of the previous claims,
**characterized in that** the mating plug contacts (5) are connected to a power distribution system (13) integrated in the mounting device.

7. Mounting device according to any of the previous claims,
**characterized by** first locating means (11) on the enclosure (6) of the switchgear (2).

8. Mounting device according to any of the previous claims,
**characterized by** second locating means (11) on the enclosure (6) of the switchgear (2).

9. Mounting device according to any of the previous claims,
**characterized in that** the plug contacts (4) protrude from the enclosure (6) of the switchgear (2).

10. Mounting device according to any of the previous claims,
**characterized in that** the mating plug contacts (5) are integrated in the mounting device (1) so as to be shockproof.

11. Mounting device according to any of the previous claims,
**characterized in that** the plug contacts (4) and the mating plug contacts (5) are arranged and orientated such that they can make contact by the plug-in movement being substantially at right angles to the rear wall (3) of the switchgear (2).

## Revendications

1. Dispositif (1) de maintien , sur lequel est fixé un appareil (2) électrique de coupure, **caractérisé par** des caractéristiques suivantes :
a) l'appareil (2) de coupure a des contacts (4) à enfichage pour la mise en contact par enfichage avec des contacts (5) à enfichage antagonistes prévus sur le dispositif (1) de maintien,
b) le dispositif (1) de maintien et l'appareil (2) de coupure sont munis de premiers moyens (7, 8) de maintien, qui maintiennent l'appareil (2) de coupure dans une position définie d'attente, sans que les contacts (4) à enfichage entrent en contact avec les contacts (5) à enfichage antagonistes de sorte que l'appareil de coupure est séparé tant du circuit d'alimentation qu'également d'appareils consommateurs raccordés.

2. Dispositif de maintien suivant la revendication 1,
**caractérisé en ce que** les premiers moyens de maintien sont constitués sous la forme de premiers moyens (7, 8) d'encliquetage pour l'encliquetage mutuel entre l'appareil (2) de coupure et le dispositif (1) de maintien.

3. Dispositif de maintien suivant la revendication 1 ou 2,
**caractérisé en ce que** le dispositif (1) de maintien a des moyens (9) de guidage, qui servent à guider l'appareil (2) de coupure lors de son mouvement d'enfichage l'amenant dans la position d'attente.

4. Dispositif de maintien suivant l'une des revendications précédentes, **caractérisé en ce que** le dispositif (1) de maintien et l'appareil (2) de coupure ont des deuxièmes moyens (11, 12) de maintien, qui maintiennent l'appareil de coupure dans une position définie de contact dans laquelle les contacts (4) à enfichage entrent en contact, avec les contacts (5) à enfichage antagonistes, la position de contact ne pouvant être atteinte qu'après être passée par la position d'attente.

5. Dispositif de maintien suivant l'une des revendications précédentes, **caractérisé en ce que** les deuxièmes moyens de maintien sont réalisés sous la forme de deuxièmes moyens (11, 12) d'encliquetage.

6. Dispositif de maintien suivant l'une des revendications précédentes, **caractérisé en ce que** les contacts (5) à enfichage antagonistes sont reliés à un système (13) de répartition du courant intégré au dispositif de maintien.

7. Dispositif de maintien suivant l'une des revendications précédentes, **caractérisé par** des premiers moyens (11) de maintien sur le boîtier (6) de l'appareil (2) de coupure.

8. Dispositif de maintien suivant l'une des revendications précédentes, **caractérisé par** des deuxièmes moyens (11) de maintien sur le boîtier (6) de l'appareil (2) de coupure.

9. Dispositif de maintien suivant l'une des revendications précédentes, **caractérisé en ce que** les contacts (4) à enfichage font saillie du boîtier (6) de l'appareil (2) de coupure.

10. Dispositif de maintien suivant l'une des revendications précédentes, **caractérisé en ce que** les contacts (5) à enfichage antagonistes sont intégrés en l'abri du toucher au dispositif (1) de maintien.

11. Dispositif de maintien suivant l'une des revendications précédentes, **caractérisé en ce que** les contacts (4) à enfichage et les contacts (5) à enfichage antagonistes sont disposés et dirigés de manière à pouvoir être mis en contact par le mouvement d'enfichage sensiblement perpendiculairemwent à la paroi (3) arrière de l'appareil (2) de coupure.
